# EUROPEAN PATENT APPLICATION

(11) **EP 4 614 432 A1**
(43) Date of publication of application: **10.09.2025**
(21) Application number: 23885003.6
(22) Date of filing: 01.11.2023
(51) Int. Cl.: G06T 5/00

(54) **CLOUD DESKTOP IMAGE PROCESSING METHOD, IMAGE PROCESSING METHOD, DEVICE, AND STORAGE MEDIUM**

(30) Priority: 02.11.2022 CN 202211363136
(71) Applicant: Cloud Intelligence Assets Holding (Singapore) Private Limited, Singapore 189554 (SG)
(72) Inventor: HUANG, Chao, Hangzhou, Zhejiang 310030 (CN); ZHANG, Xiantao, Hangzhou, Zhejiang 310030 (CN); REN, Jinkui, Shanghai 200120 (CN); TIAN, Wei, Hangzhou, Zhejiang 310030 (CN)
(74) Representative: Barker Brettell LLP
(86) International application number: PCT/CN2023/129141
(87) International publication number: WO 2024/094077

(57) **Abstract**

Embodiments of the present application provide a cloud desktop image processing method, an image processing method, a device, and a storage medium. In the present application, the cloud desktop image is divided into a plurality of image blocks, and according to color values of pixels of the image blocks, content classification is performed on the image blocks; lossless compression is performed on an image block of a target type, which can ensure a display quality of the image block of the target type; according to a smoothness of an image block of a non-target type, lossy compression is performed on the image block of the non-target type by using a quality parameter adapted to the smoothness, which can reduce the size of data quantity after compression on the basis of ensuring the display quality of the image block. Therefore, the present application uses different image compression manners to perform processing on image blocks with different content types, which makes compression rates of different regions adapt to contents of the regions, and can take the picture display quality of different regions of the image and the size of the data quantity after compression into account, thereby taking the picture display quality and network transmission bandwidth of the cloud desktop into account.

## Description

This application claims priority to Chinese Patent Application No. 202211363136.X, entitled "CLOUD DESKTOP IMAGE PROCESSING METHOD, IMAGE PROCESSING METHOD, DEVICE, AND STORAGE MEDIUM", filed with the China National Intellectual Property Administration on November 02, 2022, which is hereby incorporated by reference in its entirety.

### TECHNICAL FIELD

The present application relates to the field of image processing technology, and in particular, to a cloud desktop image processing method, an image processing method, a device, and a storage medium.

### BACKGROUND

Virtual desktop, also known as cloud desktop, is usually installed with cloud desktop transport protocol client (cloud desktop client for short) on a thin terminal. The client and a cloud desktop server perform desktop data interaction through a remote desktop protocol, and the cloud desktop server performs compression on a cloud desktop image and transmits it to the cloud desktop client, and the cloud desktop client performs decompression thereon and presents it to a user through a local display system.

Different encoding manners determine display quality of the desktop image and a size of transmission network bandwidth. High compression rate of desktop image can affect the picture display quality; while, low compression rate of the desktop image can affect the transmission network bandwidth. Therefore, how to balance the display quality of the desktop image and transmission network bandwidth is a technical problem that needs continuous research and improvement in this field.

### SUMMARY

Various aspects of the present application provide a cloud desktop image processing method, an image processing method, a device and a storage medium, which are used for realizing the balance between the display quality of the image and the transmission network bandwidth.

An embodiment of the present application provides a cloud desktop image processing method, including:
dividing a cloud desktop image to be updated into a plurality of image blocks;
according to color values of pixels of the plurality of image blocks, performing content classification on the plurality of image blocks respectively to determine content types of the plurality of image blocks;
for a first image block whose content type is a non-target type, determining a smoothness of the first image block according to a color value of a pixel of the first image block;
according to the smoothness of the first image block, performing lossy compression on the first image block by using a quality parameter adapted to the smoothness to obtain a compressed first image block, where the smoothness is inversely correlated to the quality parameter;
performing lossless compression on a second image block whose content type is a target type to obtain a compressed second image block, where the target type includes: a character type and/or a graph type; and
sending the compressed first image block, the compressed second image block, a position of the first image block in the cloud desktop image and a position of the second image block in the cloud desktop image to a cloud desktop client for the cloud desktop client to render the cloud desktop image.

An embodiment of the present application provides an image processing method, including:
dividing an image to be processed into a plurality of image blocks;
according to color values of pixels of the plurality of image blocks, performing content classification on the plurality of image blocks respectively to determine content types of the plurality of image blocks;
for a first image block whose content type is a non-target type, determining a smoothness of the first image block according to a color value of a pixel of the first image block;
according to the smoothness of the first image block, performing lossy compression on the first image block by using a quality parameter adapted to the smoothness, where the smoothness is inversely correlated to the quality parameter; and
performing lossless compression on a second image block whose content type is a target type, where the target type includes: a character type and/or a graph type.

An embodiment of the present application provides a computing device, including: a memory and a processor; where the memory is configured to store a computer program;
the processor is coupled to the memory and configured to execute the computer program for performing the steps in the above image processing method.

An embodiment of the present application further provides a computer-readable storage medium storing computer instructions, the computer instructions, when executed by one or more processors, cause the one or more processors to execute the steps in the above image processing method.

In the embodiments of the present application, the cloud desktop image to be updated can be taken as an image to be processed, the image to be processed can be divided into the plurality of image blocks, and according to the color values of the pixels of the image blocks, content classification is performed on the image blocks. For the image block of the target type (the character type and/or the graph type), lossless compression is performed thereon, which can keep a sharp edge of a character/graph region and ensure a display quality of the image block of the target type. For the image block of the non-target type, according to the smoothness of the image block of the non-target type, lossy compression is performed thereon by using the quality parameter adapted to the smoothness, which can reduce the size of data quantity after compression on the basis of ensuring the display quality of the image block. Therefore, this embodiment uses different image compression manners to perform processing on image blocks with different content types, which can make compression rates of different regions adapt to contents of the regions, and can take the picture display quality of different regions of the image and the size of the data quantity after compression into account, thereby taking the picture display quality and network transmission bandwidth of the cloud desktop into account.

### BRIEF DESCRIPTION OF DRAWINGS

The accompanying drawings illustrated herein are used to provide a further understanding of the present application and constitute a part of the present application. The illustrative embodiments of the present application and their descriptions are used to explain the present application and do not constitute undue limitations on the present application. In the accompanying drawings:
FIG. 1 is a schematic flowchart of a traditional image compression method.
FIG. 2 is a schematic diagram of a target pixel and a contrast pixel of an acquired pixel block.
FIG. 3 is a schematic flowchart of another traditional image compression method.
FIG. 4 is a schematic structural diagram of a cloud desktop system provided by an embodiment of the present application.
FIG. 5 is a schematic diagram of image blocking provided by an embodiment of the present application.
FIG. 6 is a schematic flowchart of an image processing method provided by an embodiment of the present application.
FIG. 7a is a detailed schematic flowchart of an image processing method provided by an embodiment of the present application.
FIG. 7b is a schematic flowchart of a cloud desktop image processing method provided by an embodiment of the present application;
FIG. 8 is a schematic structural diagram of a computing device provided by an embodiment of the present application.

### DESCRIPTION OF EMBODIMENTS

In order to make objectives, technical solutions, and advantages of the present application more clear, the following will be combined with the specific embodiments of the present application and the corresponding drawings to describe the technical solution of the present application clearly and completely. Obviously, the embodiments described are only a part of the embodiments of the present application and not all embodiments. Based on the embodiments in the present application, all other embodiments obtained by a person skilled in the art without making creative efforts are within the scope of protection in the present application.

Simple protocol for independent computing environment (Simple Protocol for Independent Computing Environment, SPICE) is a cloud desktop transport protocol. SPICE protocol calculates smoothness of desktop image, classifies images according to the smoothness, and distinguishes images with high, medium and low smoothness. The smoothness of the image can reflect the higher the smoothness of the content in the image, the more natural the pixel transition of the image, and the less obvious the content boundary of the image. On the contrary, the lower the smoothness of the image, the more unnatural the pixel transition of the image and the more obvious the content boundary of the image.

In SPICE protocol, Quic encoding is used to perform compression on an image with medium or low smoothness level, and Lempel-Ziv (LZ) algorithm or Global LZ (Global LZ, GLZ) encoding is used to perform compression on images with high smoothness levels.

Quic encoding is a predictive encoding algorithm, which is a SPICE's proprietary lossless image compression technology based on Sfalic algorithm. The working principle of LZ algorithm is to replace a string with a single token (token) code. Each time LZ algorithm recognizes a new string, it outputs the string and adds it to a table or dictionary. GLZ algorithm absorbs repeated pattern in the image, can make full use of the image reconstruction, shrink the image and reduce the physical bandwidth in the transmission.

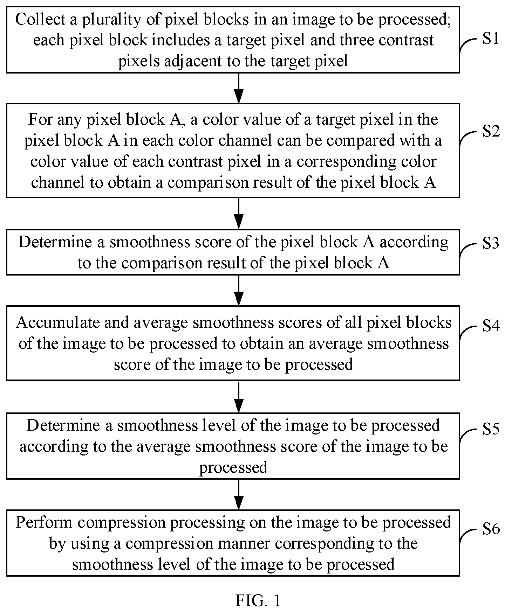

The following is an illustrative explanation of the smoothness calculation process of the image provided by SPICE protocol. As shown in FIG. 1, the smoothness calculation process of the image provided by SPICE protocol mainly includes the following steps.

S1, collect a plurality of pixel blocks in an image to be processed. Each pixel block includes a target pixel and three contrast pixels adjacent to the target pixel.

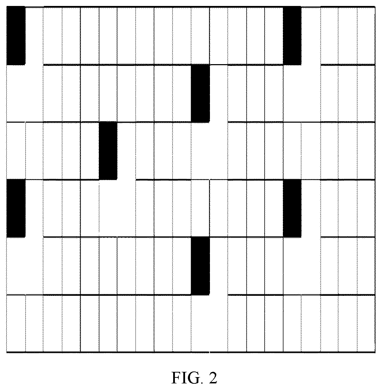

The three contrast pixels adjacent to the target pixel can be pixels located on the right side, lower side, and lower right side of the target pixel. For example, as shown in FIG. 2, each rectangle represents one pixel, and a resolution of the image to be processed is 30*6. For the image to be processed shown in FIG. 2, the target pixel (as shown by the black block in FIG. 2) can be collected every 15 pixels and three contrast pixels adjacent to the target pixel can be sampled, as shown by the gray rectangle in FIG. 2. The last row of pixels of the image to be processed is not sampled, mainly because the pixel of the last row does not have contrast pixels on the lower side and lower right side.

S2, for any pixel block A, a color value of a target pixel in the pixel block A in each color channel can be compared with a color value of each contrast pixel in a corresponding color channel to obtain a comparison result of the pixel block A.

A color channel of a pixel can be a red, yellow, or blue (R/G/B) channel, and a color value of the pixel in the color channel can be a value of the pixel in the R/G/B channel respectively. Correspondingly, the value of the target pixel in the pixel block A in the R/G/B channel can be compared with the value of each contrast pixel in the corresponding color channel to obtain the comparison result of the pixel A.

S3, determine a smoothness score of the pixel block A according to the comparison result of the pixel block A.

In SPICE protocol, a smoothness score of an image is inversely correlated to the image smoothness, that is, the smaller the smoothness score of the image is, the better the image smoothness is.

S4, accumulate and average smoothness scores of all pixel blocks of the image to be processed to obtain an average smoothness score of the image to be processed.

S5, determine a smoothness level of the image to be processed according to the average smoothness score of the image to be processed.

In the embodiment of the present application, the smoothness level can be divided into three smoothness levels of high, medium and low. Among them, high smoothness means that the smoothness of the image is less than or equal to a first smoothness threshold as set; low smoothness means that the smoothness of the image is greater than or equal to a second smoothness threshold as set, where the first smoothness threshold is smaller than the second smoothness threshold; medium smoothness means that the smoothness of the image is greater than the first smoothness threshold and less than the second smoothness threshold. In the embodiment of the present application, specific values of the first smoothness threshold and the second smoothness threshold are not limited. In some embodiments, the first smoothness threshold may be -0.03; the second smoothness threshold is 0.02. Then, the average smoothness score of the image with high smoothness is less than -0.03; the average smoothness score of the image with low smoothness is greater than 0.02; the smoothness score of the image with medium smoothness is greater than -0.03 and less than 0.02.

S6, perform compression processing on the image to be processed by using a compression manner corresponding to the smoothness level of the image to be processed.

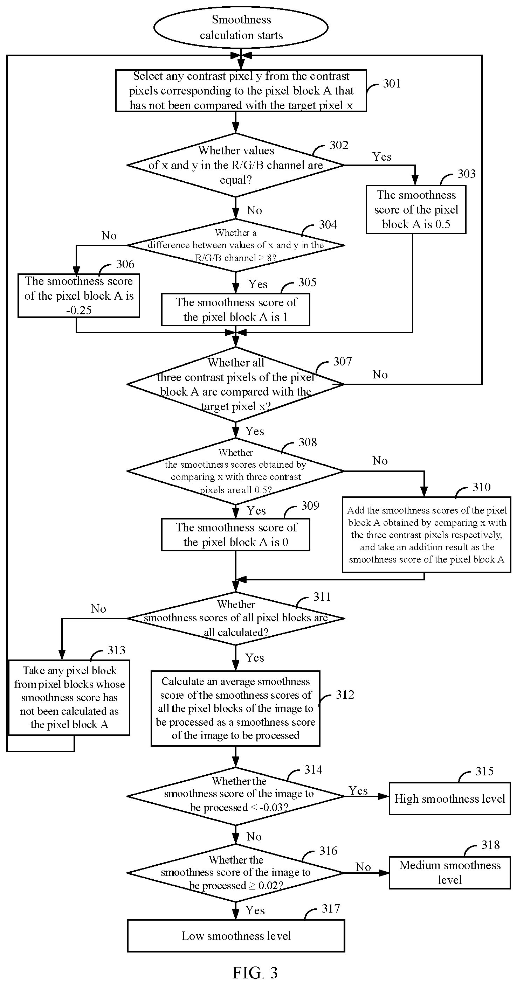

The following takes the first smoothness threshold being -0.03 and the second smoothness threshold being 0.02 as an example to illustrate the specific implementation of determining the smoothness level of the image to be processed in the above steps S2-S5. As shown in FIG. 3, the determining the smoothness level of the image to be processed specifically includes:
301, select any contrast pixel y from the contrast pixels corresponding to the pixel block A that has not been compared with the target pixel x;
302, judge whether values of the target pixel x and the contrast pixel y in the R/G/B channel are equal; if a judgment result is yes, execute step 303; and if the judgment result is not, execute step 304;
303, determine that the smoothness score of the pixel block A obtained by comparing the target pixel x with the contrast pixel y is 0.5, and then execute step 307;
304, judge whether there is a situation where a difference between values of the target pixel x and the contrast pixel y in the R/G/B channel is greater than or equal to 8; if the judgment result is yes, execute step 305; and if the judgment result is not, execute step 306;
305, determine that the smoothness score of the pixel block obtained by comparing the target pixel x with the contrast pixel y is 1, and then execute step 307;
306, determine that the smoothness score of the pixel block obtained by comparing the target pixel x with the contrast pixel y is -0.25, and then execute step 307;
307, judge whether all three contrast pixels of the pixel block A are compared with the target pixel x; if a judgment result is yes, execute step 308 is executed; and if the judgment result is not, return to execute step 301;
308, judge whether the smoothness scores of the pixel block A obtained by comparing the target pixel x with three contrast pixels are all 0.5; if a judgment result is yes, execute step 309; and if the judgment result is not, execute step 310;
309, determine that the smoothness score of the pixel block A is 0, and continue to execute step 311;
310, add the smoothness scores of the pixel block A obtained by the target pixel x and the three contrast pixels respectively, and take an addition result as the smoothness score of the pixel block A, and continue to execute step 311;
311, judge whether smoothness scores of all pixel blocks of the image to be processed are all calculated; if a judgment result is yes, execute step 312; and if the judgment result is not, execute step 313;
312, calculate an average smoothness score of the smoothness scores of all the pixel blocks of the image to be processed as a smoothness score of the image to be processed, and continue to execute step 314;
313, take any pixel block from pixel blocks whose smoothness score has not been calculated as the pixel block A, and return to execute step 301;
314, judge whether the smoothness score of the image to be processed is less than -0.03; if a judgment result is yes, execute step 315; and if the judgment result is not, execute step 316;
315, judge whether the smoothness score of the image to be processed is greater than or equal to 0.02; if a judgment result is yes, execute step 317; and if the judgment result is not, execute step 318;
316, determine that the image to be processed is of high smoothness level;
317, determine that the image to be processed is of low smoothness level;
318, determine that the image to be processed is of medium smoothness level.

Further, after determining the smoothness level of the image to be processed, the compression processing can be performed on the image to be processed by using a compression manner corresponding to the smoothness level of the image to be processed. For example, in SPICE protocol, Quic encoding can be used to perform compression on an image with medium or low smoothness level; LZ algorithm or GLZ encoding algorithm can be used to perform compression on images with high smoothness level, and the like.

According to the manner for compressing the image according to the smoothness of the image in SPCIE protocol shown in the above embodiment, it can be known that the above manner is to perform calculation on the entire image, and if there are many types of contents in the image, the image cannot be accurately classified and distinguished. For example, in practical applications, there is often a mixed image containing a character and/or graph and natural image, where the natural image refers to an image directly collected by the image acquisition equipment. The mixed image is for example, a computer desktop image and a scanned image. Because this type of image contains a character/graph with a sharp edge, if the mixed image is compressed by using the same encoding manner, it cannot take the picture quality and transmission bandwidth of the image into account. For example, if the mixed image is compressed by using the same lossless compression manner, it would lead to a large amount of data in the compressed image and require a large transmission bandwidth. If the transmission bandwidth is low, the transmission efficiency of the image would be affected. If the mixed image is compressed by using the same lossy manner, the edge of the character/graph in the mixed image would be blurred, which would affect the display quality of the character and/or graph in the mixed image and the visual effect would be poor. This is because the human eye is very sensitive to the distortion of the image edge region.

Aiming at the technical problem that the above image compression manner cannot take the display quality and the network bandwidth into account, in some embodiments of the present application, the image to be processed can be divided into the plurality of image blocks, and according to the color values of the pixels of the image blocks, content classification is performed on the image blocks. For the image block of the target type (the character type and/or the graph type), lossless compression is performed thereon, which can keep a sharp edge of a character/graph region and ensure a display quality of the image block of the target type. For the image block of the non-target type, according to the smoothness of the image block of the non-target type, lossy compression is performed thereon by using the quality parameter adapted to the smoothness, which can reduce the size of data quantity after compression on the basis of ensuring the display quality of the image block. Therefore, this embodiment uses different image compression manners to perform processing on image blocks with different content types, which can make compression rates of different regions adapt to contents of the regions, and can take the picture display quality of different regions of the image and the size of the data quantity after compression into account, thereby taking the picture display quality and network transmission bandwidth of the cloud desktop into account.

In the following, the technical solutions provided by the embodiments of the present application will be described in detail in conjunction with the accompanying drawings.

It should be noted that the same reference numerals refer to the same object in the following drawings and embodiments, so once an object is defined in one of the drawings or embodiments, it does not need to be further discussed in subsequent drawings and embodiments.

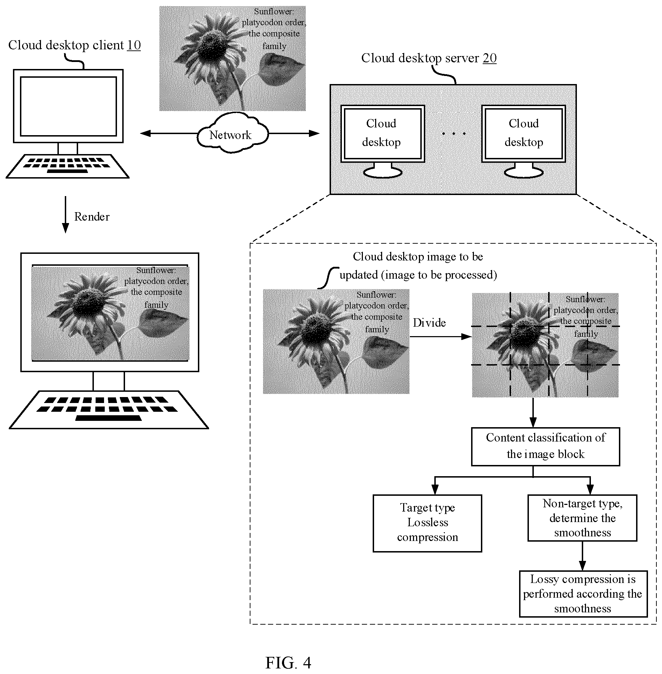

FIG. 4 is a schematic structural diagram of a cloud desktop system provided by an embodiment of the present application. As shown in FIG. 4, the system mainly includes: a cloud desktop client 10 and a cloud desktop server 20.

The connection between the cloud desktop client 10 and the cloud desktop server 20 can be wireless or wired. Optionally, the cloud desktop client 10 and the cloud desktop server can be connected through a mobile network and communication, and correspondingly, network standard of the mobile network can be any of: a 2G (such as Global System for Mobile Communications (Global System for Mobile Communications, GSM), etc.), a 2.5G (such as General Packet Radio Service (General Packet Radio Service, GPRS), etc.), a 3G (such as Wideband Code Division Multiple Access (Wideband Code Division Multiple Access, WCDMA), Time Division-synchronous Code Division Multiple Access (Time Division-synchronous Code Division Multiple Access, TD-SCDMA), Code Division Multiple Access 2000 (Code Division Multiple Access 2000, CDMA2000), Universal Mobile Telecommunications System (Universal Mobile Telecommunications System, UTMS), etc.), a 4G (such as Long Term Evolution (Long Term Evolution, LTE), etc.), a 4G+ (such as LTE-Advanced (LTE-Advanced, LTE-A), etc.), a 5G, a world interoperability for microwave access (World Interoperability for Microwave Access, WiMax), etc. Optionally, the cloud desktop client 10 and the cloud desktop server 20 can also communicate by means of Bluetooth, WiFi, and infrared ray, or the like.

In the embodiment of the present application, the cloud desktop server 20 refers to a server device that provides a cloud desktop service. The cloud desktop server 20 refers to a computer device that can perform cloud desktop management, can respond to a cloud desktop service request of the cloud desktop client 10, provides a service related to the cloud desktop for a user, and generally has a capability of bearing a service and ensuring service. The cloud desktop service that can be deployed by the cloud desktop server 20 includes but is not limited to: a cloud desktop, an operating system of the cloud desktop, a management and control service of the cloud desktop, a protocol service of the cloud desktop, and the like.

The cloud desktop server 20 can be a single server device, a cloud server array, or a virtual machine (Virtual Machine, VM) running in the cloud server array. In addition, the cloud desktop server 20 can also refer to other computing devices with corresponding service capabilities, such as a cloud desktop client device (running service program) such as a computer.

The cloud desktop client 10 refers to a device or a software functional module that can access the cloud desktop server 20 through a wireless network, such as a mobile phone, a notebook, a tablet computer, a POS machine, a thin host, and the like. Certainly, the cloud desktop client 10 can also be a soft cloud desktop client corresponding to the cloud desktop. For a cloud desktop client 10 with a physical device, a thin client (a device similar to a television set-top box) can be used to connect a display and a mouse. The cloud desktop client 10 can further install a client program corresponding to the cloud desktop, and access the virtual machine host of the cloud desktop server 20 through a specific communication protocol (such as a desktop transmission protocol) to implement an interactive operation, so as to achieve an experience effect consistent as a physical cloud desktop client (such as a computer). Meanwhile, the cloud desktop not only supports replacement of a traditional computer, but also supports other mobile devices such as a mobile phone and a tablet to access on the Internet.

The cloud desktop client 10 and the cloud desktop server 20 interact with desktop data through a remote desktop protocol, the cloud desktop server 20 performs compression on the cloud desktop image and transmits to the cloud desktop client 10, and the cloud desktop client 10 performs decompression thereon and presents it to the user through the local display system. Different encoding manners of the desktop image determine the display quality of the desktop image and the size of the transmission network bandwidth. In this embodiment of the present application, to take the display quality and the network bandwidth into account, the cloud desktop server 20 can perform block content distinguishing on the desktop image to be updated, and perform encoding compression in different manners on different content types of regions of the same desktop image. A specific implementation of compressing the desktop image by the cloud desktop server 20 is exemplarily described below.

As shown in FIG. 4, the cloud desktop server 20 can take the cloud desktop image to be updated as the image to be processed to perform image compression processing thereon. Specifically, the cloud desktop server 20 can divide the cloud desktop image to be updated into a plurality of image blocks. A plurality means 2 or more than 2. The number of image blocks is determined by a size of the image to be processed and a size of a single image block. The size of the image can be determined by the number of pixel points in the length and width of the image. For example, the length and width of the image are 242*256. 242 and 256 are the number of pixel points in the length and width of the image, respectively.

The smaller the size of the single image block, the higher the accuracy of identifying the content type of the image block. However, the smaller the size of a single image block, the more the number of image blocks, which will increase the calculation amount and slow down the calculation speed. Therefore, the size of the single image block can be flexibly set according to the accuracy requirements and calculation speed requirements of identifying the content type of image blocks.

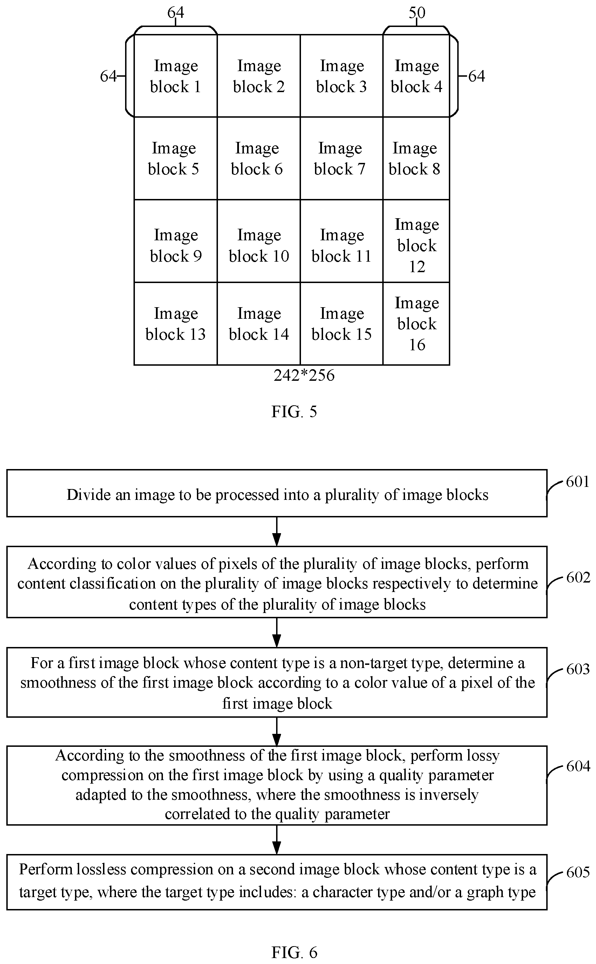

In some embodiments, the cloud desktop server 20 can divide the cloud desktop image into a plurality of image blocks according to a set size of the image block. Optionally, if a length or width of the cloud desktop image is not an integer multiple of a length or width of the image block, a size of the rightmost or lowermost image block of the cloud desktop image can be a size of an actual region. For example, as shown in FIG. 5, the size of the cloud desktop image is 242*256, and the size of a single image block is 64*64, and the cloud desktop image can be divided into 16 image blocks according to the size of the single image block 64*64, namely image blocks 1-16. For a region whose length or width is less than 64*64, the actual size of the region is taken as the size of the image block segmented by the region. For example, sizes of image blocks 4, 8, 12 and 16 in FIG. 5 are 50 * 64; where the size of the image block is 64*64.

Under normal circumstances, character or graph (Graph) information has simple colors and dramatic texture changes, while image (Image) information has rich colors and more gradual texture changes. Therefore, the color information of the character or graph is different from that of the image. The graph refers to that certain spatial shapes can be divided by contours in a space, the graph is a part of the space and does not have the ductility of space, which is a limited identifiable shape.

The color information based on character or graph is different from the color information of image. As shown in FIG. 4, based on the plurality of image blocks into which the cloud desktop image is divided, content classification is performed on the plurality of image blocks according to the color values of the pixels of the plurality of image blocks, so as to determine the content types of the plurality of image blocks, that is, to determine the content type of each image block. A color value of a pixel can be represented by the RGB value of the pixel. In the embodiment of the present application, the content types of image blocks are divided into a target type and a non-target type. The target type can include: a character type and/or a graph type. Non-target type refers to other content types besides the target type, such as image type. The non-target type is neither the character type nor the graph type.

Because the target type has simple colors and dramatic texture changes, the cloud desktop server 20 can perform lossless compression on the image block of the target type for the image block with the content type of the target type.

In the embodiment of the present application, the specific implementation of the lossless compression of the image block of the target type is not limited. Optionally, the cloud desktop server 20 can use a set lossless compression algorithm to perform lossless compression on the image block of the target type. Among them, the lossless compression algorithm includes but is not limited to a LZ algorithm, a GLZ algorithm, a LZ4 algorithm, a LZW (Lenpel-Ziv & Welch) algorithm or a Huffman (Huffman) algorithm.

Because the smoothness of image blocks may be different, if the same compression rate is used to perform compression on image blocks with different smoothness, using a compression ratio that is too high would lead to the image blocks with lower smoothness being blurred, and affect the picture quality; while using a compression ratio that is too low would lead to a large amount of data in the image blocks with high smoothness, and affect the network transmission bandwidth and network transmission efficiency. In order to further balance the picture display quality and network transmission bandwidth, for image blocks whose content type is non-target type, the cloud desktop server 20 can distinguish the image blocks of the non-target type in terms of the smoothness.

Because the more natural the pixel color transition of the image is, the smoother the image is. Therefore, as shown in FIG. 4, for the image block whose content type is the non-target type, the cloud desktop server 20 can determine the smoothness of the image block of the non-target type according to the color value of the pixel of the image block of the non-target type; according to the smoothness of the image block of the non-target type, the lossy compression is performed on the image block of the non-target type by using the quality parameter adapted to the smoothness.

Quality parameter, also known as quality factor, is a parameter that reflects the picture quality of an image. The greater the quality parameter, the smaller the loss rate of image compression and the lower the compression rate of the image. In this embodiment, the smoothness is inversely correlated to the quality parameter, that is, the higher the smoothness of an image block, the lower the adaptive quality parameter, and the higher the compression rate of the image block.

In this embodiment of the present application, the specific implementations of the lossy compression performed on the image block of the non-target type are not limited. Optionally, the cloud desktop server 20 can use the set lossy compression algorithm to perform lossy compression on the image block of the non-target type according to the smoothness of the image block of the non-target type and the quality parameter adapted to the smoothness, so that the quality parameter of the compressed image block is adapted to the smoothness of the image block. Lossy compression algorithm includes, but is not limited to, a Joint Photographic Experts Group (Joint Photographic Experts Group, JPEG) algorithm or JPEG2000, and the like.

In this embodiment, the cloud desktop server can divide the cloud desktop image to be updated into the plurality of image blocks, and according to the color values of the pixels of the image blocks, content classification is performed on the image blocks. For the image block of the target type (the character type and/or the graph type), lossless compression is performed thereon, which can keep a sharp edge of a character/graph region and ensure a display quality of the image block of the target type. For the image block of the non-target type, according to the smoothness of the image block of the non-target type, lossy compression is performed thereon by using the quality parameter adapted to the smoothness, which can reduce the size of data quantity after compression on the basis of ensuring the display quality of the image block. Therefore, this embodiment uses different image compression manners to perform processing on image blocks with different content types, which can make compression rates of different regions adapt to contents of the regions, and can take the picture display quality of different regions of the image and the size of the data quantity after compression into account, thereby taking the picture display quality and network transmission bandwidth of the cloud desktop into account.

After the cloud desktop server 20 performs image compression on the plurality of image blocks of the cloud desktop image by using the adaptive image compression manner, as shown in FIG. 4, the cloud desktop server 20 can send a compressed image block of the target type and a position of the image block of the target type in the cloud desktop image and a compressed image block of the non-target type and a position of the image block of the non-target type in the cloud desktop image to the cloud desktop client 10.

Correspondingly, the cloud desktop client 10 can render the compressed cloud desktop image according to the position of the image block of the target type in the cloud desktop image and the position of the image block of the non-target type in the cloud desktop image. Specifically, the cloud desktop client 10 can splice the compressed image block of the target type and the compressed image block of the non-target type according to the position of the image block of the target type in the cloud desktop image and the position of the image block of the non-target type in the cloud desktop image, to obtain a compressed cloud desktop image; and render the compressed cloud desktop image to realize update of the desktop image.

The above system embodiment only takes the image to be processed as a desktop image as an example to exemplarily illustrate the application scenario of the embodiment of the present application. Of course, the image processing method provided by the embodiment of the present application can also be applicable for other application scenarios. For example, it can be applied to an application scenario where a terminal loads a network picture, and the like. The specific implementation of the image processing method provided by the embodiment of the present application will be illustrated exemplarily in combination with the method embodiment.

FIG. 6 is a schematic flowchart of an image processing method provided by an embodiment of the present application. As shown in FIG. 6, the method mainly includes:
S601, divide an image to be processed into a plurality of image blocks;
S602, according to color values of pixels of the plurality of image blocks, perform content classification on the plurality of image blocks respectively to determine content types of the plurality of image blocks;
S603, for a first image block whose content type is a non-target type, determine a smoothness of the first image block according to a color value of a pixel of the first image block;
S604, according to the smoothness of the first image block, perform lossy compression on the first image block by using a quality parameter adapted to the smoothness, where the smoothness is inversely correlated to the quality parameter; and
S605, perform lossless compression on a second image block whose content type is a target type, where the target type includes: a character type and/or a graph type.

In this embodiment, an image to be processed is any frame image that needs to be compressed. In the cloud desktop application scenario, the image to be processed can be the desktop image to be updated. In step 601, the image to be processed can be divided into a plurality of image blocks. A plurality means 2 or more than 2.

Under normal circumstances, character or graph (Graph) information has simple colors and dramatic texture changes, while image (Image) information has rich colors and more gradual texture changes. Therefore, in step 602, content classification can be performed on the plurality of image blocks respectively according to the color values of the pixels of the plurality of image blocks, so as to determine the content types of the plurality of image blocks, that is, to determine the content type of each image block. A color value of a pixel can be represented by the RGB value of the pixel. In the embodiment of the present application, the content types of image blocks are divided into a target type and a non-target type. The target type can include: a character type and/or a graph type. Non-target type refers to other content types besides the target type, such as image type. The non-target type is neither the character type nor the graph type

In the embodiment of the present application, the specific implementation for performing content classification on the image blocks is not limited. For a plurality of image blocks, the manner for performing the content classification on each image block is the same. Taking an image block B in the plurality of image blocks as an example, several embodiments for performing content classification on the image block are illustrated below, where the image block B is any of the plurality of image blocks.

Implementation 1: because the character or graph information has simple colors, while the image information has rich colors, thus in some embodiments, the number of colors contained in the image block B can be determined according to color values of pixels of the image block B. In an embodiment where the color values are represented by RGB values, the number of the colors contained in the image block B can be determined according to the RGB values of the pixels of the image block B. For any two pixels, if the RGB values of the two pixels have different color values in a color channel, it is determined that the colors of the two pixels are different. For example, two pixels have the same color value in the R and G color channels but different color values on the B channel, then it is determined that the colors of the two pixels are different. For another example, two pixels have the same color value on the R channel but different color values in the G and B color channels, then it can also be determined that the colors of the two pixels are different.

Because the character or graph information has simple colors, if the number of colors of the image block B is less than or equal to a set color number threshold, the content type of the image block B is determined as the target type. In the embodiment of the present application, it is not further distinguished whether the image block of the target type is of a character type or a graph type.

In the embodiment of the present application, the specific value of the color number threshold is not limited. Optionally, the color number threshold can be any integer between 50 and 60, etc. Preferably, the color number threshold can be 50.

Implementation 2: when the image is displayed, the character rendering would exhibit a certain font rendering characteristic. Manners of character rendering can include: gray-scale rendering or sub pixel rendering, etc.

Gray-scale rendering is a manner that achieves an original shape of the font by controlling brightness of pixel points on the outline of the font. Sub pixel rendering is a manner that uses a principle that each pixel in an LCD screen is a color of a complete pixel mixed by a color and brightness of three RGB sub pixels, to reflect the outline points on the font by three sub pixels to achieve the original shape.

Sub pixel means that an imaging plane of an area array camera takes pixels as the smallest unit. A distance between pixel centers varies from several to ten microns. In order to maximize the use of image information to improve the resolution, the concept of sub pixel is proposed. That is, there is a pixel between two physical pixels, which is called sub pixel, and it is obtained by calculation.

Through research, the inventor of the present application finds that the font rendering characteristic is mainly reflected on the color type of the font pixel. The color type of the pixel refers to the color of the pixel, such as black, white, gray, red, green and blue. For example, for the manner of gray-scale font rendering, the pixels of character are generally gray pixels, and the color values in the red channel are different. For another example, for sub pixel font rendering, the color types of continuous pixels of character meet a certain distribution characteristic and the like. Therefore, before judging whether the image block X meets the specific font rendering characteristic, the color type of each pixel in the pixel block needs to be determined.

In some embodiments, the color types of the pixels of the image block B can be determined according to the color values of the pixels of the image block B. Specifically, for any pixel X in the image block B, the color type of the pixel X can be determined according to a color value of the pixel X in color channels (such as three channels of R/G/B). The implementation for determining the color type of the pixel X will be illustrated exemplarily in combination with several optional embodiments.

Implementation 2.1: according to the color values of the pixel X in the color channels (such as three channels of R/G/B), a difference between the color values of the pixel X in the color channels (such as three channels of R/G/B) can be determined. The difference between the color values of the pixel X in the color channels can be expressed by an absolute value of the difference between the color values of the pixel X in every two channels. The difference between the color values of the pixel X in the three channels of R/G/B can be expressed as an absolute value of a difference between a R value and a G value of the pixel X (i.e., |*R*-*G*|) and an absolute value of a difference between a G value and a B value of the pixel X (i.e., |*G*-*B*|).

Further, if the difference between the color values of the pixel X in the color channels is less than an upper limit of color difference as set, it is determined that the color type of any pixel X is a gray pixel. The upper limit of color difference is greater than 0 and less than or equal to 10. If the upper limit of color difference is 10, it can indicate that the pixel X is determined to be the gray pixel if the RGB value of the pixel X is that |*R*-*G*|<10 and |*G-B*|<10, or |*R*-*G*|<10 and |*R-B*|<10.

Implementation 2.2: if the pixel X in the color channels (such as three channels of R/G/B) are greater than a set first upper limit value, it is determined that the color type of the pixel X is a white pixel, where 220≤the first upper limit value<255. If the first upper limit value is 220, then the pixel X is determined to be the white pixel if the color values of the pixel X in RGB channels are all greater than 220, that is, the pixel X meets R>220, G>220 and B>220.

Implementation 2.3: if the color values of the pixel X in the color channels are less than a first lower limit value, it is determined that the color type of the pixel X is a black pixel, where the upper limit of the color difference < the first lower limit value < the first upper limit value. For example, the first lower limit value can be 100, etc.

Implementation 2.4: if a color value of the pixel X in the red channel is greater than a color value of the pixel X in the green channel, and the color value of the pixel X in the red channel is greater than a color value of the pixel X in the blue channel, the color type of the pixel X is determined to be a red pixel. That is, if the R value of the pixel X > the G value and the R value of the pixel X > the B value, it is determined that the color type of the pixel X is the red pixel.

Implementation 2.5: if the color value of the pixel X in the blue channel is greater than the color value of the pixel X in the green channel, and the color value of the pixel X in the blue channel is greater than the color value of the pixel X in the red channel, the color type of the pixel X is determined to be a blue pixel. That is, if the B value of the pixel X > the G value and the B value of the pixel X > the R value, it is determined that the color type of the pixel X is the blue pixel.

A manner of determining the color type of the pixel shown in the above embodiment is merely an example for description, and does not constitute a limitation. In the embodiment of the present application, the above implementations 2.1-2.5 can be performed in parallel, or can be performed in sequence. When the implementations 2.1-2.5 are executed in sequence, the order in which the implementations 2.1-2.5 are performed is not limited; optionally, can be performed in an order of 2.1-2.5, and the like. When the implementations 2.1-2.5 are executed in sequence, if the pixel X meets a determination condition before execution, the subsequent implementations will not be executed.

Pixel X is any pixel in the image block B, so color types of all pixels in the image block B can be determined in the same way.

Further, according to the color type of the pixel in the image block B, it can be judged whether the image block B has the target font rendering characteristic. Correspondingly, if the image block B has the target font rendering characteristic, the content type of the image block B is determined to be the target type. Specifically, it can be determined that the content type of the image block B is the character type.

In the embodiment of the present application, the target font rendering characteristic refers to a rendering characteristic exhibited by a character when it is rendered by using a specific character rendering manner.

For example, for the manner of gray-scale rendering, the target font rendering characteristic is realized as gray-scale font rendering characteristic. The rendering characteristic of the gray-scale font can be realized as follows: the color types of M consecutive pixels are all gray pixels, and the color values of M consecutive gray pixels in the red channel are all different. In the embodiment of the present application, a specific value of M is determined by the number of pixels occupied by one stroke of a character. Generally, M> 2 and is an integer. In some embodiments, M=3 or M=4, etc. If M=3, the gray-scale font rendering characteristic can be realized as follows: there are three consecutive pixels P1 (RGB values are R1, G1 and B1), P2 (RGB values are R2, G2 and B2) and P3 (RGB values are R3, G3 and B3) in the image block, and the three consecutive pixels P1, P2 and P3 are all gray pixels, and R1≠R2≠R3.

Correspondingly, according to the color type of the pixel of the image block B, it can be judged whether the image block B is in a situation where there are M consecutive pixels whose color types are gray pixels.; if there are M consecutive gray pixels in the image block, and color values of the M consecutive gray pixels in the red channel are all different, it is determined that the image block B has the gray-scale font rendering characteristic, that is, has the target font rendering characteristic. Further, it can be determined that the content type of the image block B is the target type.

For another example, in some embodiments, the font rendering manner is a sub pixel font rendering manner. Correspondingly, the target font rendering characteristic can be realized as a sub pixel font rendering characteristic. Through research, the applicant finds that the sub pixel font rendering characteristic can be shown as follows: (1) there are N continuous pixels whose color type distribution meets a first color distribution requirement of the sub pixel font rendering characteristic; and/or, (2) there are K continuous pixels whose color type distribution meets a second color distribution requirement of the sub pixel font rendering characteristic, where K>N>2, and both K and N are integers. The first color distribution requirement and the second color distribution requirement are related to the values of N and K respectively.

Correspondingly, an implementation of judging whether the image block B has the target font rendering characteristic according to the color type of the pixel of the image block B can be realized by performing at least one of the following judgment operations:
judging operation 1: according to the color type of the pixel of the image block B, judging whether the image block B is in a situation where there are N continuous pixels whose color type distribution meets a first color type distribution requirement of the sub pixel font rendering characteristic; and
judging operation 2: according to the color type of the pixel of the image block B, judging whether the image block B is in a situation where there are K continuous pixels whose color type distribution meets a second color type distribution requirement of the sub pixel font rendering characteristic; where K>N>2, and both K and N are integers.

Correspondingly, if a judgment result of at least one of the judgment operation is yes, it is determined that the image block B has the sub pixel font rendering characteristic, that is, has the target font rendering characteristic.

It should be noted that the above judgment operations 1 and 2 can be implemented alternatively or in combination. If judgment operations 1 and 2 are combined to implement, in a case that a judgment operation of judgment operations 1 and 2 is yes, it is determined that the image block B has the sub pixel font rendering characteristic, that is, has the target font rendering characteristic.

The first color distribution requirement and the second color distribution requirement are related to the values of N and K respectively. The values of N and K are specifically determined by the number of pixels occupied by any stroke of a character. The following will exemplarily illustrate the first color distribution requirement and the second color distribution requirement by taking N=3 and K=4 as an example.

Through research, the inventor of the present application finds that when N=3, the first color type distribution requirement of the sub pixel font rendering characteristic can be realized as the following features:
characteristic 1: there are 3 consecutive pixels P1, P2 and P3 whose color types are respectively that: P1 is a white pixel, P2 is a red pixel and P3 is a black pixel;
characteristic 2: there are 3 consecutive pixels P4, P5 and P6 whose color types are respectively that: P4 is a white pixel, P5 is a red pixel and P6 is a black pixel.

Correspondingly, if the image block B meets the above characteristics 1 and 2 at the same time, it is determined that the image block B meets the first color type distribution requirement.

Based on this, when N=3, the above judgment operation 1 can be realized as follows: according to the color type of the pixel of the image block B, it is judged whether the image block B is in a situation where there are 3 continuous pixels whose color types are a white pixel, a red pixel and a black pixel in turn; and, according to the color type of the pixel of the image block B, it is judged whether the image block B is in a situation where there are 3 continuous pixels whose color types are a black pixel, a blue pixel and a white pixel in turn. Correspondingly, if a judgment result is that the image block B is in the situation where there are 3 continuous pixels whose color types are the white pixel, the red pixel and the black pixel in turn, and in the situation where there are 3 continuous pixels whose color types are the black pixel, the blue pixel and the white pixel in turn, it is determined that the image block B is in a situation where there are 3 continuous pixels whose color type distribution meets the first color type distribution requirement of the sub pixel font rendering characteristic. Further, it can be determined that the image block B has sub pixel font rendering characteristic, and the content type of the image block B can be determined as the target type.

The inventors of the present application also finds that when K=4 in the above judgment operation 2, the second color type distribution requirement of the sub pixel font rendering characteristic can be realized as at least one of the following features:
characteristic 3: there are 4 consecutive pixels P1, P2, P3 and P4 whose color types are respectively that: P1 is a white pixel, P2 is a red pixel, P3 is a blue pixel and P4 is a white pixel;
characteristic 4: there are 3 consecutive pixels P4, P5, P6 and P7 whose the color types are respectively that: P4 is a black pixel, P5 is a blue pixel, P6 is a red pixel, and P7 is a black pixel.

Correspondingly, if the image block B meets any one of the above characteristics 3 and 4 or both characteristics 3 and 4, it is determined that the image block B meets the second color type distribution requirement.

Based on this, when K=4, the above judgment operation 2 can be realized as follows: according to the color type of the pixel of the image block B, it is judged whether the image block B is in a situation where there are 4 continuous pixels whose color type distribution is a white pixel, a red pixel, a blue pixel and a white pixel; and, according to the color type of the pixel of the image block B, it is judged whether the image block B is in a situation where there are 4 continuous pixels whose color type distribution is a black pixel, a blue pixel, a red pixel and a black pixel. Correspondingly, if a judgment result is that the image block B is in the situation where there are 4 continuous pixels whose color type distribution is the white pixel, the red pixel, the blue pixel and the white pixel, and/or in the situation where there are 4 continuous pixels whose color type distribution is the black pixel, the blue pixel, the red pixel and the black pixel, it is determined that the image block B is a the situation where there are 4 continuous pixels whose color type distribution meets the second color type distribution requirement of the sub pixel font rendering characteristic. Further, it can be determined that the image block B has sub pixel font rendering characteristic, and the content type of the image block B can be determined as the target type.

The implementation performing the content classification on the image blocks in the above embodiment is merely an example for description, and does not constitute a limitation. It should be noted that implementations 1 and 2 for performing the content classification on the image blocks can be implemented alternatively or in combination. When the above implementations 1 and 2 are combined to implement, the implementations 1 and 2 can be executed in parallel or in series. When implementations 1 and 2 are executed in series, the order of execution of implementations 1 and 2 is not limited. Considering that the calculation amount of determining the number of colors of the image block is smaller than that of determining whether the image block has the target font rendering characteristic, when implementations 1 and 2 are executed in series, implementation 1 can be executed first, and some image blocks whose content type is the target type can be screened out by implementation 1; for an image block that cannot be determined as the target type in implementation 1, implementation 2 can be used to further determine the content type of the image block.

Specifically, if the judgment result of implementation 1 above is that the number of the colors contained in the image block B is greater than the set color number threshold, implementation 2 above can be used to judge whether the content type of the image block B is the target type. Detailed description can be found in the related contents of implementation 2 above, and will not be repeated here.

Through the above step 602 and its specific implementation, it can be determined whether the content type of the image block is the target type or the non-target type, that is, an image block that cannot be determined as of the target type is of the non-target type.

In the embodiment of the present application, for convenience of description and distinction, the image block of the non-target type is defined as the first image block, and the image block of the target type is defined as the second image block. The number of the first image block and the number of the second image block may be 1 or multiple. Multiple means 2 or more than 2. The number of the first image block and the number of the second image block are specifically determined by the content of the image to be processed.

After determining the content types of a plurality of image blocks, because the target type has simple colors and dramatic texture changes, in step 605, for an image block whose content type is the target type, lossless compression can be performed on the image block of the target type.

For the image blocks whose content type is the non-target type, because the smoothness of image blocks may be different, if the same compression rate is used to perform compression on image blocks with different smoothness, using a compression ratio that is too high would lead to the image blocks with lower smoothness being blurred, and affect the picture quality; while using a compression ratio that is too low would lead to a large amount of data in the image blocks with high smoothness, and affect the network transmission bandwidth and network transmission efficiency. In order to further balance the picture display quality and network transmission bandwidth, for image blocks whose content type is non-target type, the image blocks of the non-target type can be distinguished in terms of the smoothness.

Because the more natural the pixel color transition of the image is, the smoother the image is. Therefore, in step 603, for the image block whose content type is the non-target type, the smoothness of the image block of the non-target type can be determined according to the color value of the pixel of the image block of the non-target type.

In some embodiments, for any image block C of the non-target type, a plurality of pixel blocks can be obtained from image block C. A plurality means 2 or more than 2. Each pixel block includes a target pixel and a plurality of contrast pixels. For the specific implementation of obtaining the plurality of pixel blocks, refer to the related contents in FIG. 1 to FIG. 3 above. In this embodiment, image block C is the image to be processed in FIG. 1. Further, for any pixel block D, a smoothness of the pixel block D is determined according to color values of the target pixel of pixel block D in color channels and color values of the contrast pixels of pixel block D in the color channels. For the specific implementation of determining the smoothness of pixel block D, refer to the related contents of determining the smoothness of pixel block X in FIG. 1 to FIG. 3, which will not be repeated here.

Further, according to the smoothness of the plurality of pixel blocks of image block C, an average smoothness of the plurality of pixel blocks is calculated as the smoothness of image block C. For the specific implementation of this step, refer to the related content of determining the smoothness of the image to be processed in FIG. 1 to FIG. 3 above, which will not be repeated here.

After determining the smoothness of each image block of the non-target type, in step 604, according to the smoothness of the image block of the non-target type, lossy compression is performed on the image block of the non-target type by using the quality parameter adapted to the smoothness.

Referring to FIG. 1 to FIG. 3, the smoothness of the image blocks can be distinguished by smoothness levels of the image blocks. In the embodiment of the present application, referring to the above-mentioned FIG. 1 to FIG. 3, the smoothness of the above image block C can be represented by using an average smoothness score of image block C determined in the above FIG. 1 to FIG. 3. The higher the average smoothness score of the image block, the lower the smoothness of the image block. Correspondingly, step 604 can be realized as: determining the smoothness level of image block C according to the average smoothness score of image block C of the non-target type. For the classification of smoothness levels, refer to the related contents in FIG. 1 to FIG. 3 above, which will not be repeated here.

Further, lossy compression is performed on image block C by using the quality parameter adapted to the smoothness level. The quality parameter is inversely correlated to the smoothness level. That is, the greater the smoothness level, the smaller the quality parameter. For example, for an image block with high smoothness level, a lossy compression algorithm and a first quality parameter can be used to perform lossy compression on the image block with high smoothness level. For an image block with medium or low smoothness level, the lossy compression algorithm and a second quality parameter can be used to perform lossy compression on the image block with medium or low smoothness level. The first quality parameter is smaller than the second quality parameter. For example, the lossy compression algorithm can be JPEG algorithm, the first quality parameter can be 85, the second quality parameter can be 95, and the like.

It should be noted that in this embodiment, step 605 and steps 603-604 can be executed in parallel or in sequence. When steps 603-605 are executed in sequence, the order of execution of steps 605 and 603-604 is not limited. Optionally, step 605 can be performed first and then steps 603-604 are executed; of course, steps 603-604 can be executed first, and then step 605 is executed. Alternatively, step 603 can be executed first, then step 604 and step 605 can be executed in turn, and the like.

In some embodiments of the present application, the image to be processed can be divided into the plurality of image blocks, and according to the color values of the pixels of the image blocks, content classification is performed on the image blocks. For the image block of the target type (the character type and/or the graph type), lossless compression is performed thereon, which can keep a sharp edge of a character/graph region and ensure a display quality of the image block of the target type. For the image block of the non-target type, according to the smoothness of the image block of the non-target type, lossy compression is performed thereon by using the quality parameter adapted to the smoothness, which can reduce the size of data quantity after compression on the basis of ensuring the display quality of the image block. Therefore, this embodiment uses different image compression manners to perform processing on image blocks with different content types, which can make compression rates of different regions adapt to contents of the regions, and can take the picture display quality of different regions of the image and the size of the data quantity after compression into account, thereby taking the picture display quality and network transmission bandwidth of the cloud desktop into account.

The image processing method provided in the above embodiment can be applied to the server device, and the server device can perform compression on the image by using the image processing method provided in the above embodiment, and send the compressed image to other devices (such as user terminals) for display. Therefore, the size of the compressed image affects the image transmission efficiency. In the embodiment of the present application, in order to improve the image transmission efficiency, after determining the content types of image blocks of the image to be processed, for the second image blocks whose content type is the target type, according to a position of the second image block in the image to be processed, adjacent second image blocks can be merged to obtain a merged second image block. The number of the merged second image block can be 1 or more, depending on the content distribution of the image to be processed.

Of course, for the first image blocks whose content type is the non-target type, adjacent first image blocks whose smoothness are at the same smoothness level can be merged according to a position of the first image block in the image to be processed and the smoothness of the first image block to obtain a merged first image block. The number of the merged second image block can be 1 or more, which depends on the content distribution of the image to be processed.

Correspondingly, the above step 604 can be realized as: according to a smoothness level of the merged first image block, performing lossy compression on the merged first image block by using a quality parameter adapted to the smoothness level of the merged first image block; where the greater the smoothness, the higher the smoothness level, and the smoothness level is inversely correlated to the quality parameter.

Correspondingly, the above step 605 can be realized as performing lossless compression on the merged second image block.

The position of each image block in the image to be processed can be expressed by vertex coordinates of the image block in the image to be processed; or expressed by central coordinates of the image block and the size of the image block; or expressed by coordinates of the top left corner of the image block and the size of the image block. Therefore, by merging the adjacent second image blocks and merging the adjacent first image blocks whose smoothness are at the same smoothness level, when the compressed image to be processed is sent, the number of position information of the image blocks sent can be reduced, and the transmission efficiency of the compressed image to be processed can be improved.

Based on a compressed and merged first image block and a compressed and merged second image block, the compressed and merged first image block and a position of the merged first image block in the image to be processed, and the compressed and merged second image block and a positions of the merged second image block in the image to be processed can be sent to the terminal.

Correspondingly, the terminal can render the compressed and merged first image block and the compressed and merged second image block according to the position of the merged in the image to be processed and the position of the merged second image block in the image to be processed, so as to update the desktop image.

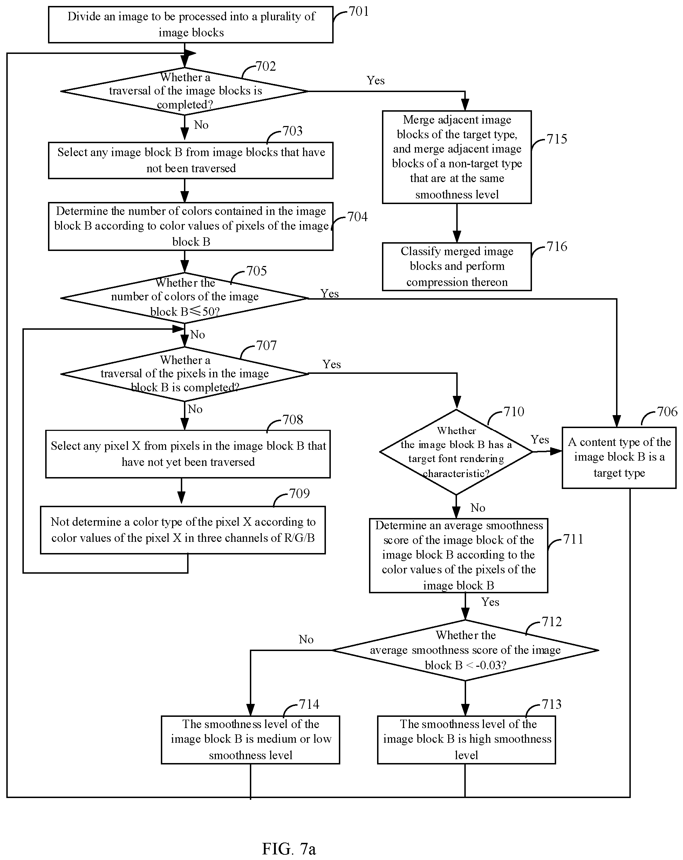

In order to facilitate the understanding of the logic of the above image processing method, an exemplary illustration will be given below in conjunction with the specific embodiment shown in FIG. 7a. As shown in FIG. 7a, the method mainly includes the following steps.

701, divide an image to be processed into a plurality of image blocks.

702, judge whether a traversal of the image blocks is completed; if a judgment result is yes, execute step 715; and if the judgment result is not, execute step 703.

703, select any image block B from image blocks that have not been traversed.

704, determine the number of colors contained in the image block B according to color values of pixels of the image block B.

705, judge whether the number of the colors of the image block B is less than or equal to 50; if a judgment result is yes, execute step 706; and if the judgment result is not, execute step 707.

706, determine that a content type of the image block B is a target type, and return to execute step 702.

707, judge whether a traversal of the pixels in the image block B is completed; if a judgment result is yes, execute step 710; and if the judgment result is not, execute step 708.

708, select any pixel X from pixels in the image block B that have not yet been traversed.

709, determine a color type of the pixel X according to color values of the pixel X in three channels of R/G/B, then return to execute step 707.

710, according to color types of pixels in the image block B, judge whether the image block B has a target font rendering characteristic; if a judgment result is yes, execute step 706; and if the judgment result is not, execute step 711.

711, determine an average smoothness score of the image block of the image block B according to the color values of the pixels of the image block B.

For details about the implementation of step 711, refer to FIG. 1 to FIG. 3 above. In this step 711, the image block B is the image to be processed in FIG. 1 to FIG. 3.

712, judge whether the average smoothness score of the image block B is less than -0.03; if a judgment result is yes, execute step 713; and if the judgment result is not, execute step 714.

713, determine the smoothness level of the image block B as high smoothness level; return to execute step 702.

714, determine the smoothness level of the image block B as medium or low smoothness level; return to execute step 702.

715, merge adjacent image blocks of the target type, and merge adjacent image blocks of a non-target type that are at the same smoothness level.

716, classify merged image blocks and perform compression thereon. For the specific implementation, refer to the relevant contents of step 604 and step 605 above, which will not be repeated here.

The image to be processed in the image processing method provided in the above embodiment is any frame image that needs to be compressed. In the cloud desktop application scenario, the image to be processed can be the cloud desktop image to be updated. Taking the image to be processed as a cloud desktop image to be updated as an example, the image processing method provided by the embodiment of the present application will be exemplarily described below.

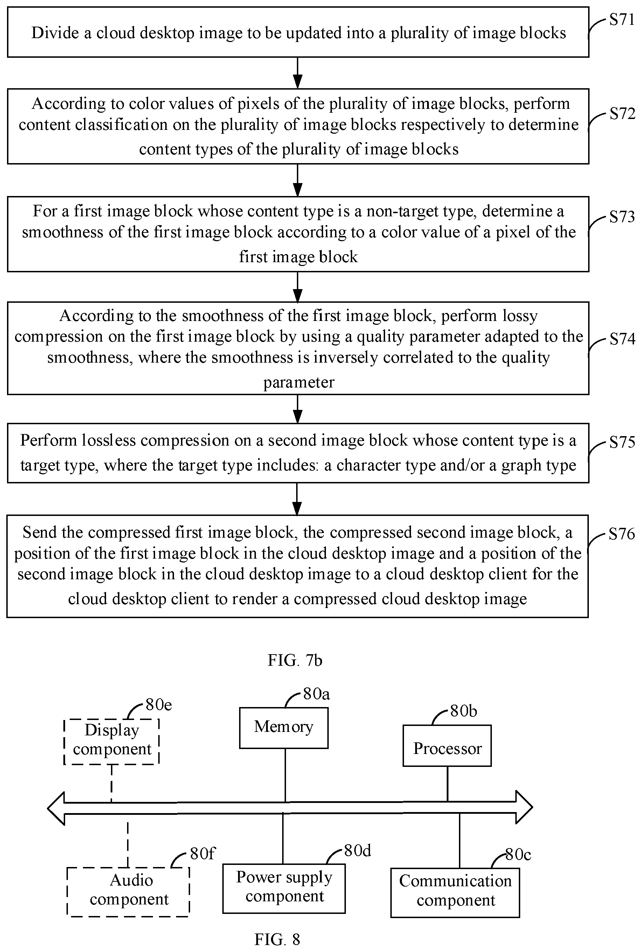

FIG. 7b is a schematic flowchart of a cloud desktop image processing method provided by an embodiment of the present application. As shown in FIG. 7b, the cloud desktop image processing method includes:
S71, divide a cloud desktop image to be updated into a plurality of image blocks;
S72, according to color values of pixels of the plurality of image blocks, perform content classification on the plurality of image blocks respectively to determine content types of the plurality of image blocks;
S73, for a first image block whose content type is a non-target type, determine a smoothness of the first image block according to a color value of a pixel of the first image block;
S74, according to the smoothness of the first image block, perform lossy compression on the first image block by using a quality parameter adapted to the smoothness to obtain a compressed first image block, where the smoothness is inversely correlated to the quality parameter;
S75, perform lossless compression on a second image block whose content type is a target type to obtain a compressed second image block, where the target type includes: a character type and/or a graph type; and
S76, send the compressed first image block, the compressed second image block, a position of the first image block in the cloud desktop image and a position of the second image block in the cloud desktop image to a cloud desktop client for the cloud desktop client to render a compressed cloud desktop image.

The compressed cloud desktop image is the compressed image of the cloud desktop image to be updated in step S71. In this embodiment, in the cloud desktop application scenario, the cloud desktop image to be updated can be divided into the plurality of image blocks, and according to the color values of the pixels of the image blocks, content classification is performed on the image blocks. For the image block of the target type (the character type and/or the graph type), lossless compression is performed thereon, which can keep a sharp edge of a character/graph region and ensure a display quality of the image block of the target type. For the image block of the non-target type, according to the smoothness of the image block of the non-target type, lossy compression is performed thereon by using the quality parameter adapted to the smoothness, which can reduce the size of data quantity after compression on the basis of ensuring the display quality of the image block. Therefore, this embodiment uses different image compression manners to perform processing on image blocks with different content types, which can make compression rates of different regions adapt to contents of the regions, and can take the picture display quality of different regions of the image and the size of the data quantity after compression into account, thereby taking the picture display quality and network transmission bandwidth of the cloud desktop into account.

For the specific implementations of steps S71-S76, refer to the related content of the above embodiments, which will not be repeated here.

It should be noted that execution subjects of steps of the method provided in the above embodiment can be the same device, or the method can also be executed by different devices as the execution subject. For example, the execution subject of steps 601 and 602 can be device A; for another example, the execution subject of step 601 can be device A, and the execution subject of step 602 can be device B; etc.

In addition, some processes described in the above embodiments and the accompanying drawings contain a plurality of operations that appear in a specific order, but it should be clearly understood that these operations may be executed out of the order in which they appear in this document or in parallel. The serial numbers of the operations, such as 601 and 602, are only used to distinguish different operations, and the serial numbers themselves do not represent any execution order. In addition, these processes may include more or fewer operations, and these operations may be performed in sequence or in parallel.

Correspondingly, an embodiment of the present application further provides a computer-readable storage medium storing computer instructions, which, when executed by one or more processors, cause the one or more processors to execute the steps in the above cloud desktop image processing method and/or the image processing method.

FIG. 8 is a schematic structural diagram of a computing device provided by an embodiment of the present application. As shown in FIG. 8, the computing device mainly includes a memory 80a and a processor 80b, where the memory 80a is configured to store a computer program.

The processor 80b is coupled to the memory 80a and is configured to execute the computer program to: divide an image to be processed into a plurality of image blocks; according to color values of pixels of the plurality of image blocks, perform content classification on the plurality of image blocks respectively to determine content types of the plurality of image blocks; for a first image block whose content type is a non-target type, determine a smoothness of the first image block according to a color value of a pixel of the first image block; according to the smoothness of the first image block, perform lossy compression on the first image block by using a quality parameter adapted to the smoothness, where the smoothness is inversely correlated to the quality parameter; perform lossless compression on a second image block whose content type is a target type, where the target type includes: a character type and/or a graph type.

Optionally, when performing content classification on the plurality of image blocks respectively according to the color values of the pixels of the plurality of image blocks, the processor 80b is specifically configured to: for any image block of the plurality of image blocks, determine the number of colors contained in the any image block according to a color value of a pixel of the any image block; and if the number of the color contained in the any image block is less than or equal to a set color number threshold, determine the content type of the any image block as the target type.

Furthermore, when performing content classification on the plurality of image blocks respectively according to the color values of the pixels of the plurality of image blocks, the processor 80b is further configured to: if the number of the color contained in the any image block is greater than the set color number threshold, determine a color type of the pixel of the any image block according to the color value of the pixel of the any image block; judge whether the any image block has a target font rendering characteristic according to the color type of the pixel of the any image block; and if a judgment result is yes, determine the content type of the any image block as the target type.

In some other embodiments, when performing content classification on the plurality of image blocks respectively according to the color values of the pixels of the plurality of image blocks, the processor 80b is specifically configured to: determine a color type of a pixel of the any image block according to a color value of the pixel of the any image block; judge whether the any image block has a target font rendering characteristic according to the color type of the pixel of the any image block; and if a judgment result is yes, determine the content type of the any image block as the target type.

Optionally, when determining the color type of the pixel of the any image block according to the color value of the pixel of the any image block, the processor 80b is specifically configured to: for any pixel of the any image block, determine a color type of the any pixel according to color values of the any pixel in the color channels.

Optionally, when determining the color type of the any pixel according to the color values of the any pixel in the color channels, the processor 80b is specifically configured to perform the following operations:
according to the color values of the any pixel in the color channels, determine a difference between the color values of the any pixel in the color channels;
if the difference between the color values of the any pixel in the color channels is less than an upper limit of color difference as set, determine that the color type of the any pixel is a gray pixel;
correspondingly, if the color values of the any pixel in the color channels are greater than a first upper limit value, determine that the color type of the any pixel is a white pixel;
if the color values of the any pixel in the color channels are less than a first lower limit value, determine that the color type of the any pixel is a black pixel; where the upper limit of the color difference < the first lower limit value < the first upper limit value;
if a color value of the any pixel in a red channel is greater than a color value of the any pixel in a green channel, and the color value of the any pixel in the red channel is greater than a color value of the any pixel in a blue channel, determine that the color type of the any pixel is a red pixel;
if the color value of the any pixel in the blue channel is greater than the color value of the any pixel in the green channel, and the color value of the any pixel in the blue channel is greater than the color value of the any pixel in the red channel, determine that the color type of the any pixel is a blue pixel.

In some embodiments, the target font rendering characteristic includes: a gray-scale font rendering characteristic. Correspondingly, when judging whether the any image block has the target font rendering characteristic according to the color type of the pixel of the any image block, the processor 80b is specifically configured to: according to the color type of the pixel of the any image block, judge whether the any image block is in a situation where there are M continuous pixels whose color types are gray pixels; where M>2, and M is an integer; and if there are M consecutive gray pixels in the any image block, and color values of the M consecutive gray pixels in a red channel are all different, determine that the any image block has the gray-scale font rendering characteristic.

In other embodiments, the target font rendering characteristic includes: a sub pixel font rendering characteristic. Correspondingly, when judging whether the any image block has the target font rendering characteristic according to the color type of the pixel of the any image block, the processor 80b is specifically configured to perform at least one of following judgment operations:
according to the color type of the pixel of the any image block, judge whether the any image block is in a situation where there are N continuous pixels whose color type distribution meets a first color type distribution requirement of the sub pixel font rendering characteristic;
according to the color type of the pixel of the any image block, judge whether the any image block is in a situation where there are K continuous pixels whose color type distribution meets a second color type distribution requirement of the sub pixel font rendering characteristic; where K>N>2, and both K and N are integers; and
if a judgment result of at least one of the judgment operation is yes, determine that the any image block has the sub pixel font rendering characteristic.

In some embodiments, N=3. Correspondingly, when judging whether the any image block is in the situation where there are N continuous pixels whose color type distribution meets the first color type distribution requirement of the sub pixel font rendering characteristic, the processor 80b is specifically configured to: according to the color type of the pixel of the any image block, judge whether the any image block is in a situation where there are 3 continuous pixels whose color types are a white pixel, a red pixel and a black pixel in turn; and according to the color type of the pixel of the any image block, judge whether the any image block is in a situation where there are 3 continuous pixels whose color types are a black pixel, a blue pixel and a white pixel in turn; and if a judgment result is that the any image block is in the situation where there are 3 continuous pixels whose color types are the white pixel, the red pixel and the black pixel in turn, and in the situation where there are 3 continuous pixels whose color types are the black pixel, the blue pixel and the white pixel in turn, determine that the any image block is in a situation where there are 3 continuous pixels whose color type distribution meets the first color type distribution requirement of the sub pixel font rendering characteristic.

In other embodiments, K=4. Correspondingly, when judging whether the any image block is in the situation where there are K continuous pixels whose color type distribution meets the second color type distribution requirement of the sub pixel font rendering characteristic, the processor 80b is specifically configured to: according to the color type of the pixel of the any image block, judge whether the any image block is in a situation where there are 4 continuous pixels whose color type distribution is a white pixel, a red pixel, a blue pixel and a white pixel; according to the color type of the pixel of the any image block, judge whether the any image block is in a situation where there are 4 continuous pixels whose color type distribution is a black pixel, a blue pixel, a red pixel and a black pixel; and if a judgment result is that the any image block is in the situation where there are 4 continuous pixels whose color type distribution is the white pixel, the red pixel, the blue pixel and the white pixel, and/or in the situation where there are 4 continuous pixels whose color type distribution is the black pixel, the blue pixel, the red pixel and the black pixel, determine that the any image block is in a situation where there are 4 continuous pixels whose color type distribution meets the second color type distribution requirement of the sub pixel font rendering characteristic.

In the embodiment of the present application, when determining the smoothness of the first image block according to the color value of the pixel of the first image block, the processor 80b is specifically configured to: obtain a plurality of pixel blocks from the first image block; where each pixel block includes a target pixel and a plurality of contrast pixels; for any pixel block, according to color values of the target pixel of the any pixel block in color channels and color values of the contrast pixels of the any pixel block in the color channels, determine a smoothness of the any pixel block; and according to the smoothness of the plurality of pixel blocks, calculate an average smoothness of the plurality of pixel blocks as the smoothness of the first image block.

Correspondingly, when performing lossy compression on the first image block by using the quality parameter adapted to the smoothness according to the smoothness of the first image block, the processor 80b is specifically configured to: if the smoothness of the first image block is less than or equal to a set smoothness upper limit, determine a smoothness type of the first image block as a first level smoothness (such as high smoothness level); perform lossy compression on the first image block by using a quality parameter adapted to the first level smoothness; if the smoothness of the first image block is greater than the set smoothness upper limit, determine the smoothness type of the first image block as a second level smoothness (middle and low smoothness level); and perform lossy compression on the first image block by using a quality parameter adapted to the second level smoothness; where the quality parameter adapted to the second level smoothness is greater than the quality parameter adapted to the first level smoothness.

In some embodiments, the processor 80b is further configured to: according to a position of the second image block in the image to be processed, merge adjacent second image blocks to obtain a merged second image block; and according to a position of the first image block in the image to be processed and the smoothness of the first image block, merge adjacent first image blocks whose smoothness are at a same smoothness level to obtain a merged first image block.

Correspondingly, when performing lossy compression on the first image block by using the quality parameter adapted to the smoothness according to the smoothness of the first image block, the processor 80b is specifically configured to: according to a smoothness level of the merged first image block, perform lossy compression on the merged first image block by using a quality parameter adapted to the smoothness level of the merged first image block; where the greater the smoothness, the higher the smoothness level, and the smoothness level is inversely correlated to the quality parameter.

Correspondingly, when performing lossless compression on the second image block whose content type is the target type, the processor 80b is specifically configured to: perform lossless compression on the merged second image block.

Optionally, the processor 80b is further configured to: send a compressed and merged first image block, a compressed and merged second image block, a position of the merged first image block in the image to be processed and a position of the merged second image block in the image to be processed to a terminal through a communication component 80c of the computing device, so that the terminal renders the compressed and merged first image block and the compressed and merged second image block according to the position of the merged first image block in the image to be processed and the position of the merged second image block in the image to be processed.

In some embodiments, the processor 80b is further configured to: divide a cloud desktop image to be updated into a plurality of image blocks; according to color values of pixels of the plurality of image blocks, perform content classification on the plurality of image blocks respectively to determine content types of the plurality of image blocks; for a first image block whose content type is a non-target type, determine a smoothness of the first image block according to a color value of a pixel of the first image block; according to the smoothness of the first image block, perform lossy compression on the first image block by using a quality parameter adapted to the smoothness to obtain a compressed first image block, where the smoothness is inversely correlated to the quality parameter; perform lossless compression on a second image block whose content type is a target type to obtain a compressed second image block, where the target type includes: a character type and/or a graph type; and send the compressed first image block, the compressed second image block, a position of the first image block in the cloud desktop image and a position of the second image block in the cloud desktop image to a cloud desktop client for the cloud desktop client to render a compressed cloud desktop image.

In some optional implementations, as shown in FIG. 8, the computing device may further include components such as a power supply component 80d. In some embodiments, the computing device can be implemented as a terminal device such as a computer and a mobile phone. Correspondingly, the computing device can also include optional components such as a display component 80e and an audio component 80f. Only some components are shown schematically in FIG. 8, which does not mean that the computing device must include all the components shown in FIG. 8, nor does it mean that the computing device can only include the components shown in FIG. 8.

The computing device provided by the embodiment can divide the image to be processed into the plurality of image blocks, and according to the color values of the pixels of the image blocks, content classification is performed on the image blocks. For the image block of the target type (the character type and/or the graph type), lossless compression is performed thereon, which can keep a sharp edge of a character/graph region and ensure a display quality of the image block of the target type. For the image block of the non-target type, according to the smoothness of the image block of the non-target type, lossy compression is performed thereon by using the quality parameter adapted to the smoothness, which can reduce the size of data quantity after compression on the basis of ensuring the display quality of the image block. Therefore, this embodiment uses different image compression manners to perform processing on image blocks with different content types, which can make compression rates of different regions adapt to contents of the regions, and can take the picture display quality of different regions of the image and the size of the data quantity after compression into account, thereby taking the picture display quality and network transmission bandwidth of the cloud desktop into account.

In an embodiment of the present application, the memory is configured to store a computer program and can be configured to store various other data to support operations on the device on which it is located. Among them, the processor can execute the computer program stored in the memory to realize the corresponding control logic. The memory can be implemented by any type of volatile or non-volatile storage device or a combination of them, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or an optical disk.

In an embodiment of the present application, the processor can be any hardware processing device that can execute the above method logic. Optionally, the processor can be a central processing unit (Central Processing Unit, CPU), a graphics processing unit (Graphics Processing Unit, GPU) or a microcontroller unit (Microcontroller Unit, MCU); it can also be programmable devices such as a field-programmable gate array (Field-Programmable Gate Array, FPGA), a programmable array logic device (Programmable Array Logic device, PAL), a general array Logic device (general array logic, GAL), a complex programmable logic device (Complex Programmable Logic Device, CPLD) and other programmable devices; or an advanced reduced instruction set (RISC) processor (Advanced RISC Machines, ARM) or a system on chip (System on Chip, SOC), etc., but not limited thereto.

In an embodiment of the present application, the communication component is configured to facilitate wired or wireless communication between the device where it is located and other devices. The device where the communication component is located can access the wireless network based on communication standards, such as WiFi, 2G or 3G, 4G, 5G or their combination. In an exemplary embodiment, the communication component receives a broadcast signal or broadcast related information from an external broadcast management system via a broadcast channel. In an exemplary embodiment, the communication component may also be implemented based on near field communication (NFC) technology, radio frequency identification (RFID) technology, infrared data association (IrDA) technology, ultra-wideband (UWB) technology, Bluetooth (BT) technology or other technologies.

In an embodiment of the present application, the display component can include a liquid crystal display (LCD) and a touch panel (TP). If the display component includes the touch panel, the display component can be implemented as a touch screen to receive an input signal from a user. The touch panel includes one or more touch sensors to sense touch, sliding and gestures on the touch panel. The touch sensors can not only sense a boundary of the touch or sliding action, but also detect the duration and pressure related to the touch or sliding operation.

In an embodiment of the present application, the power supply component is configured to provide power to various components of the device in which it is located. The power supply component can include a power management system, one or more power supplies, and other components associated with generating, managing, and distributing power for the device where the power supply component is located.

In an embodiment of the present application, the audio component can be configured to output and/or input an audio signal. For example, the audio component includes a microphone (MIC), which is configured to receive an external audio signal when the device in which the audio component is located is in an operation mode, such as call mode, recording mode and voice recognition mode. The received audio signal can be further stored in the memory or transmitted via the communication component. In some embodiments, the audio component further includes a speaker for outputting the audio signal. For example, for a device with language interaction function, voice interaction with a user, and the like can be realized through the audio component.

It should be noted that the descriptions of "first" and "second" herein are used to distinguish different messages, devices, modules, etc., and do not represent the sequence, nor do they limit that "first" and "second" are different types.

It should be understood by those skilled in the art that the embodiments of the present application can be provided as a method, a system, or a computer program product. Therefore, the present application can take a form of an entirely hardware embodiment, an entirely software embodiment, or an embodiment combining software and hardware aspects. Moreover, the present application can take a form of a computer program product implemented on one or more computer-usable storage medium (including but not limited to disk storage, CD-ROM, optical storage, etc.) containing computer-usable program codes.

The present application is described with reference to a flowchart and/or a block diagram of the method, the device (system), and the computer program product according to the embodiments of the present application. It should be understood that each flow and/or block in the flowchart and/or block diagram, and a combination of the flow and/or block in the flowchart and/or block diagram can be implemented by computer program instructions. These computer program instructions can be provided to a processor of a general-purpose computer, special-purpose computer, embedded processor or other programmable data processing device to produce a machine, such that the instructions which are executed by the processor of the computer or other programmable data processing device produce a mean for implementing a function specified in one or more flow in the flowchart and/or one or more blocks in the block diagram.

These computer program instructions can also be stored in a computer-readable memory that can direct a computer or other programmable data processing device to work in a particular manner, such that the instructions stored in the computer-readable memory produce an article of manufacture including instruction means that implement a function specified in one or more flow in the flowchart and/or one or more blocks in the block diagram.

These computer program instructions can also be loaded onto a computer or other programmable data processing device, such that a series of operational steps are performed on the computer or other programmable device to produce a computer-implemented process, such that the instructions executed on the computer or other programmable device provide steps for implementing a function specified in one or more flow in the flowchart and/or one or more blocks in the block diagram.

In a typical configuration, the computing device includes one or more processors (CPU), an input/output interface, a network interface, and a memory.

The memory may include a non-permanent memory, a random access memory (RAM) and/or a nonvolatile memory in the computer-readable medium, such as read-only memory (ROM) or flash memory (flash RAM). The memory is an example of the computer-readable medium.

The storage medium for a computer is a readable storage medium, which can also be called a readable medium. Readable storage medium, including permanent and non-permanent, removable and non-removable media, can store information by any method or technology. Information can be computer-readable instructions, data structures, modules of programs or other data. An example of the storage medium for the computer includes, but is not limited to: a phase change memory (PRAM), a static random access memory (SRAM), a dynamic random access memory (DRAM), other types of random access memory (RAM), a read-only memory (ROM), an electrically erasable programmable read-only memory (EEPROM), a flash memory or other memory technologies, a compact disc read-only memory (CD-ROM), and a digital versatile disc (DVD), or other optical storage, a magnetic cassettes, a magnetic disk storage or other magnetic storage devices or any other non-transmission medium, can be used to store information that can be accessed by the computing device. According to the definition herein, the computer-readable medium does not include a temporary computer-readable media (transitory media), such as a modulated data signal and a carrier wave.

It should also be noted that the terms "including", "containing" or any other variation thereof are intended to cover non-exclusive inclusion, so that a process, method, commodity or device including a series of elements includes not only those elements, but also other elements not explicitly listed, or includes elements inherent to such process, method, commodity or device. Without more restrictions, an element defined by a sentence "including a" does not exclude the existence of other identical elements in the process, method, commodity or equipment including the above elements.

The above contents are only embodiments of the present application, and are not used to limit the present application. Various modifications and variations will occur to those skilled in the art. Any modification, equivalent replacement, improvement, etc. made within the spirit and principle of the present application should be included in the scope of the claims of the present application.

## Claims

1. A cloud desktop image processing method, comprising:
dividing a cloud desktop image to be updated into a plurality of image blocks;
according to color values of pixels of the plurality of image blocks, performing content classification on the plurality of image blocks respectively to determine content types of the plurality of image blocks;
for a first image block whose content type is a non-target type, determining a smoothness of the first image block according to a color value of a pixel of the first image block;
according to the smoothness of the first image block, performing lossy compression on the first image block by using a quality parameter adapted to the smoothness to obtain a compressed first image block, wherein the smoothness is inversely correlated to the quality parameter;
performing lossless compression on a second image block whose content type is a target type to obtain a compressed second image block, wherein the target type comprises: a character type and/or a graph type; and
sending the compressed first image block, the compressed second image block, a position of the first image block in the cloud desktop image and a position of the second image block in the cloud desktop image to a cloud desktop client for the cloud desktop client to render a compressed cloud desktop image.

2. An image processing method, comprising:
dividing an image to be processed into a plurality of image blocks;
according to color values of pixels of the plurality of image blocks, performing content classification on the plurality of image blocks respectively to determine content types of the plurality of image blocks;
for a first image block whose content type is a non-target type, determining a smoothness of the first image block according to a color value of a pixel of the first image block;
according to the smoothness of the first image block, performing lossy compression on the first image block by using a quality parameter adapted to the smoothness, wherein the smoothness is inversely correlated to the quality parameter; and
performing lossless compression on a second image block whose content type is a target type, wherein the target type comprises: a character type and/or a graph type.

3. The method according to claim 2, wherein the according to the color values of the pixels of the plurality of image blocks, performing content classification on the plurality of image blocks respectively to determine the content types of the plurality of image blocks comprises:
for any image block of the plurality of image blocks, determining a number of colors contained in the any image block according to a color value of a pixel of the any image block; and
if the number of the color contained in the any image block is less than or equal to a set color number threshold, determining the content type of the any image block as the target type.

4. The method according to claim 2, wherein the according to the color values of the pixels of the plurality of image blocks, performing content classification on the plurality of image blocks respectively to determine the content types of the plurality of image blocks comprises:
for any image block of the plurality of image blocks, determining a color type of a pixel of the any image block according to a color value of the pixel of the any image block;
judging whether the any image block has a target font rendering characteristic according to the color type of the pixel of the any image block; and
if a judgment result is yes, determining the content type of the any image block as the target type.

5. The method according to claim 3, wherein the according to the color values of the pixels of the plurality of image blocks, performing content classification on the plurality of image blocks respectively to determine the content types of the plurality of image blocks further comprises:
if the number of the color contained in the any image block is greater than the set color number threshold, determining a color type of the pixel of the any image block according to the color value of the pixel of the any image block;
judging whether the any image block has a target font rendering characteristic according to the color type of the pixel of the any image block; and
if a judgment result is yes, determining the content type of the any image block as the target type.

6. The method according to claim 4 or 5, wherein the determining the color type of the pixel of the any image block according to the color value of the pixel of the any image block comprises:
according to color values of any pixel of the any image block in color channels, determining a difference between the color values of the any pixel in the color channels;
if the difference between the color values of the any pixel in the color channels is less than an upper limit of color difference as set, determining that the color type of the any pixel is a gray pixel;
if the color values of the any pixel in the color channels are greater than a first upper limit value, determining that the color type of the any pixel is a white pixel;
if the color values of the any pixel in the color channels are less than a first lower limit value, determining that the color type of the any pixel is a black pixel; wherein the upper limit of the color difference < the first lower limit value < the first upper limit value;
if a color value of the any pixel in a red channel is greater than a color value of the any pixel in a green channel, and the color value of the any pixel in the red channel is greater than a color value of the any pixel in a blue channel, determining that the color type of the any pixel is a red pixel; and
if the color value of the any pixel in the blue channel is greater than the color value of the any pixel in the green channel, and the color value of the any pixel in the blue channel is greater than the color value of the any pixel in the red channel, determining that the color type of the any pixel is a blue pixel.

7. The method according to claim 4 or 5, wherein the target font rendering characteristic comprises: a gray-scale font rendering characteristic; the judging whether the any image block has the target font rendering characteristic according to the color type of the pixel of the any image block comprises:
according to the color type of the pixel of the any image block, judging whether the any image block is in a situation where there are M continuous pixels whose color types are gray pixels; wherein M>2, and M is an integer; and
if there are M consecutive gray pixels in the any image block, and color values of the M consecutive gray pixels in a red channel are all different, determining that the any image block has the gray-scale font rendering characteristic.

8. The method according to claim 4 or 5, wherein target font rendering characteristic comprises: a sub pixel font rendering characteristic; the judging whether the any image block has the target font rendering characteristic according to the color type of the pixel of the any image block comprises performing at least one of following judgment operations:
according to the color type of the pixel of the any image block, judging whether the any image block is in a situation where there are N continuous pixels whose color type distribution meets a first color type distribution requirement of the sub pixel font rendering characteristic;
according to the color type of the pixel of the any image block, judging whether the any image block is in a situation where there are K continuous pixels whose color type distribution meets a second color type distribution requirement of the sub pixel font rendering characteristic; wherein K>N>2, and both K and N are integers; and
if a judgment result of at least one of the judgment operation is yes, determining that the any image block has the sub pixel font rendering characteristic.

9. The method according to claim 8, wherein N=3, the according to the color type of the pixel of the any image block, judging whether the any image block is in the situation where there are N continuous pixels whose color type distribution meets the first color type distribution requirement of the sub pixel font rendering characteristic comprises:
according to the color type of the pixel of the any image block, judging whether the any image block is in a situation where there are 3 continuous pixels whose color types are a white pixel, a red pixel and a black pixel in turn;
according to the color type of the pixel of the any image block, judging whether the any image block is in a situation where there are 3 continuous pixels whose color types are a black pixel, a blue pixel and a white pixel in turn; and
if a judgment result is that the any image block is in the situation where there are 3 continuous pixels whose color types are the white pixel, the red pixel and the black pixel in turn, and in the situation where there are 3 continuous pixels whose color types are the black pixel, the blue pixel and the white pixel in turn, determining that the any image block is in a situation where there are 3 continuous pixels whose color type distribution meets the first color type distribution requirement of the sub pixel font rendering characteristic.

10. The method according to claim 8, wherein K=4, the according to the color type of the pixel of the any image block, judging whether the any image block is in the situation where there are K continuous pixels whose color type distribution meets the second color type distribution requirement of the sub pixel font rendering characteristic comprises:
according to the color type of the pixel of the any image block, judging whether the any image block is in a situation where there are 4 continuous pixels whose color type distribution is a white pixel, a red pixel, a blue pixel and a white pixel;
according to the color type of the pixel of the any image block, judging whether the any image block is in a situation where there are 4 continuous pixels whose color type distribution is a black pixel, a blue pixel, a red pixel and a black pixel; and
if a judgment result is that the any image block is in the situation where there are 4 continuous pixels whose color type distribution is the white pixel, the red pixel, the blue pixel and the white pixel, and/or in the situation where there are 4 continuous pixels whose color type distribution is the black pixel, the blue pixel, the red pixel and the black pixel, determining that the any image block is in a situation where there are 4 continuous pixels whose color type distribution meets the second color type distribution requirement of the sub pixel font rendering characteristic.

11. The method according to claim 2, wherein the determining the smoothness of the first image block according to the color value of the pixel of the first image block comprises:
obtaining a plurality of pixel blocks from the first image block; wherein each pixel block comprises a target pixel and a plurality of contrast pixels;
for any pixel block, according to color values of the target pixel of the any pixel block in color channels and color values of the contrast pixels of the any pixel block in the color channels, determining a smoothness of the any pixel block; and
according to the smoothness of the plurality of pixel blocks, calculating an average smoothness of the plurality of pixel blocks as the smoothness of the first image block.

12. The method according to claim 2, further comprising:
according to a position of the second image block in the image to be processed, merging adjacent second image blocks to obtain a merged second image block; and
according to a position of the first image block in the image to be processed and the smoothness of the first image block, merging adjacent first image blocks whose smoothness are at a same smoothness level to obtain a merged first image block;
the according to the smoothness of the first image block, performing lossy compression on the first image block by using the quality parameter adapted to the smoothness comprises:
according to a smoothness level of the merged first image block, performing lossy compression on the merged first image block by using a quality parameter adapted to the smoothness level of the merged first image block; wherein the greater the smoothness, the higher the smoothness level, and the smoothness level is inversely correlated to the quality parameter;
the performing lossless compression on the second image block whose content type is the target type comprises: performing lossless compression on the merged second image block;
the method further comprises:
sending a compressed and merged first image block, a compressed and merged second image block, a position of the merged first image block in the image to be processed and a position of the merged second image block in the image to be processed to a terminal for the terminal to render the compressed and merged first image block and the compressed and merged second image block according to the position of the merged first image block in the image to be processed and the position of the merged second image block in the image to be processed.

13. A computing device, comprising: a memory and a processor; wherein the memory is configured to store a computer program;
the processor is coupled to the memory and configured to execute the computer program for performing the steps in the method according to any one of claims 1-12.

14. A computer-readable storage medium storing computer instructions, wherein the computer instructions, when executed by one or more processors, cause the one or more processors to execute the steps in the method according to any one of claims 1-12.
